# EUROPÄISCHE PATENTSCHRIFT

(11) **EP 1 351 852 B1**
(45) Veröffentlichungstag und Bekanntmachung des Hinweises auf die Patenterteilung: **15.12.2004**
(21) Anmeldenummer: 02716670.1
(22) Anmeldetag: 21.01.2002
(51) Int. Cl.: B62B 13/04

(54) **SCHNEEGLEITER**
SNOW RIDER
ENGIN DE GLISSE SUR NEIGE

(30) Priorität: 19.01.2001 DE 10102340
(43) Veröffentlichungstag der Anmeldung: 15.10.2003
(73) Patentinhaber: JYKK GMBH, D-70192 Stuttgart (DE)
(72) Erfinder: JUNGNICKEL, Nils-Peter, Ken, 70192 Stuttgart (DE)
(74) Vertreter: Klingseisen, Franz, Dipl.-Ing.
(86) Internationale Anmeldenummer: PCT/EP2002/000558
(87) Internationale Veröffentlichungsnummer: WO 2002/070321

(56) Entgegenhaltungen:
- WO-A-99/29377
- US-A- 1 672 782

## Beschreibung

Die vorliegende Erfindung betrifft einen Schneegleiter gemäß dem Oberbegriff des Anspruchs 1.

Aus WO-A-99 28 377 ist ein derartiger Schneegleiter bekannt, umfassend eine Gleitplatte, eine vordere Strebe, deren unteres Ende an dem vorderen Bereich der Gleitplatte in Richtung nach vome und nach hinten verschwenkbar angebracht ist und die sich schräg nach hinten und oben erstreckt, eine Lenkstange am oberen Ende der vorderen Strebe, eine Rahmenstrebe, deren vorderes Ende im mittleren Bereich der vorderen Strebe verschwenkbar angebracht ist und die sich nach unten und nach hinten in eine zentrale Position über der Gleitplatte erstreckt, eine Fuß-Abstützplatte, und eine Stützstrebe, deren vorderes Ende nahe bei dem oberen Bereich der vorderen Strebe schwenkbar angebracht ist und die sich nach hinten und unten erstreckt.

Als ein anderer Schneegleiter ist ein Snowboard bekannt. Jedoch sind mit dem Fahren eines Snowboards die zwei nachfolgend angegebenen Schwierigkeiten verbunden.
1) Der Fahrer gleitet in Querrichtung, wobei er die Balance mit in Querrichtung ausgerichteter Körperhaltung hält, was in Hinblick auf den menschlichen Körperbau nicht natürlich ist und welche Fahrweise schwierig ist.
2) Obwohl die untere Körperhälfte des Fahrers an dem Gerät festgelegt ist, befindet sich die obere Körperhälfte in einem freien Zustand, und ist es schwierig, die Balance zu halten.

Als weiterer Schneegleiter ist ein sogenannter Skibob verbreitet, der in dem US-Patent 5 351 975 offenbart ist. Ein solcher Skibob ist mit einer Struktur mit einer Steuerungszwecken dienenden vorderen Gleitplatte und einer Abstützzwecken dienenden hinteren Gleitplatte ausgestattet, die eine Anbringungszwecken dienende Abstützplatte aufweist, um beide Füße des Benutzers über der Abstützzwecken dienenden hinteren Gleitplatte auszurichten, und wobei ein Griff an der Steuerungszwecken dienenden vorderen Gleitplatte befestigt ist.

Bei diesem Skibob gleitet der Fahrer in der Richtung nach vom, während er zu der Richtung nach vom ausgerichtet ist, und entsprechend ist der Skibob in Hinblick auf den menschlichen Körperbau dem Snowboard überlegen, und weiter kann, weil der Griff vorgesehen ist, die obere Körperhälfte in einem gewissen Grad zurückgehalten werden, und wird der Vorteil erreicht, dass die Manövrierbarkeit vergleichsweise ausgezeichnet ist.

Jedoch ist bei dem Skibob im Wesentlichen entlang der Gesamtlänge der Abstützzwecken dienenden Gleitplatte, die in sich durchbiegen muss, ein Rahmen-Verlängerungsbereich, der einen Verlängerungsbereich eines starren Rahmens bildet, befestigt, und daher wird von der bei der Gleitplatte inhärent vorgesehenen Manövrierbarkeit nicht wirksam vollständig Gebrauch gemacht. Das heißt, bei dem oben beschriebenen Skibob treten die nachfolgend angegebenen vier Nachteile auf.
1) Die Richtung kann nicht durch Betätigen des Griffs geändert werden, sondern wird durch Verkannten (physikalische Gewichtsverlagerung) geändert. Der Fahrer ist ziemlich darauf angewiesen, sich auf das Vorhandensein des Griffs zu verlassen, und das Fahren ist mit Problemen verbunden.
2) Trotz etwa 160 cm zwischen dem vorderen Endbereich der vorderen Platte und dem hinteren Endbereich der hinteren Platte durch Aufteilen in zwei Teile ist die effektive Kantenlänge extrem kürzer als diejenige eines Skis oder eines Snowboards, und wird ein nachteiliger Einfluss auf das Fahren bewirkt.
3) Die vordere Platte ist kurz, und von dem an der Platte inhärent vorgesehenen Merkmal des "Durchbiegens" wird nicht vollständig Gebrauch gemacht.
4) In dem Fall der gegenwärtigen Struktur fällt, wenn der Griff nach links gedreht wird, der Rahmen nach links, und fällt, wenn der Griff nach rechts gedreht wird, der Rahmen nach rechts. In diesem Fall muss das Fahren eines Bogens ausgeführt werden, während beim Fahren der Griff umgekehrt gedreht wird. Das heißt ein Bogen muss stets mit Verzögerung gefahren werden.

Somit ist es eine Aufgabe der Erfindung, einen neuen Schneegleiter zu schaffen, der eine ausgezeichnete Manövrierbarkeit in Hinblick auf den menschlichen Körperbau besitzt und der in ausgezeichneter Weise vollständigen Gebrauch von dem Merkmal einer Gleitplatte machen kann.

Das oben angegebene Problem wird gelöst mittels eines Schneegleiters, gemäß Anspruch 1. Dieser Schneegleiter umfasst:
eine Gleitplatte in der Gestalt eines Snowboards;
eine vordere Strebe, deren unteres Ende an dem vorderen Bereich der Gleitplatte ausschließlich in Richtung nach vom und nach hinten verschwenkbar angebracht ist und die sich in einer schrägen Richtung nach hinten und oben erstreckt;
einen Griff, der an dem cberen Ende der vorderen Strebe befestigt ist;
einen starren Rahmen, dessen vorderes Ende an dem mittleren Bereich der vorderen Strebe schwenkbar angebracht ist und der sich von dort in Richtung zu der hinteren Seite erstreckt, wobei er in einer gabelförmigen Gestalt aufgeteilt ist und sich zu der unteren Seite hin von einer zentralen Position aus über der Gleitplatte in der Richtung von vom nach hinten zu der hinteren Seite hin erstreckt;
zwei Stücke von Rahmen-Verlängerungsbereichen in Fortsetzung des starren Rahmens in einer gabelförmigen Gestalt, die sich zu der hinteren Seite hin entlang der Seitenkanten der Gleitplatte erstrecken und an der Gleitplatte fest angebracht sind;
einen Fuß-Abstützplatte, die zwischen den Rahmen-Verlängerungsbereichen angeordnet ist;
eine hintere Strebe, deren vorderes Ende an dem oberen Bereich der vorderen Strebe schwenkbar angebracht ist und die sich in der Richtung nach hinten und unter erstreckt und deren hinteres Ende an der Fuß-Abstützplatte schwenkbar angebracht ist;
einen Fuß-Halteriemen, der an den Rahmen-Verlängerungsbereichen oder an der Fuß-Abstützplatte angebracht ist; und
Federungen, die an der vorderen Strebe, an dem starren Rahmen und an der hinteren Strebe vorgesehen sind.

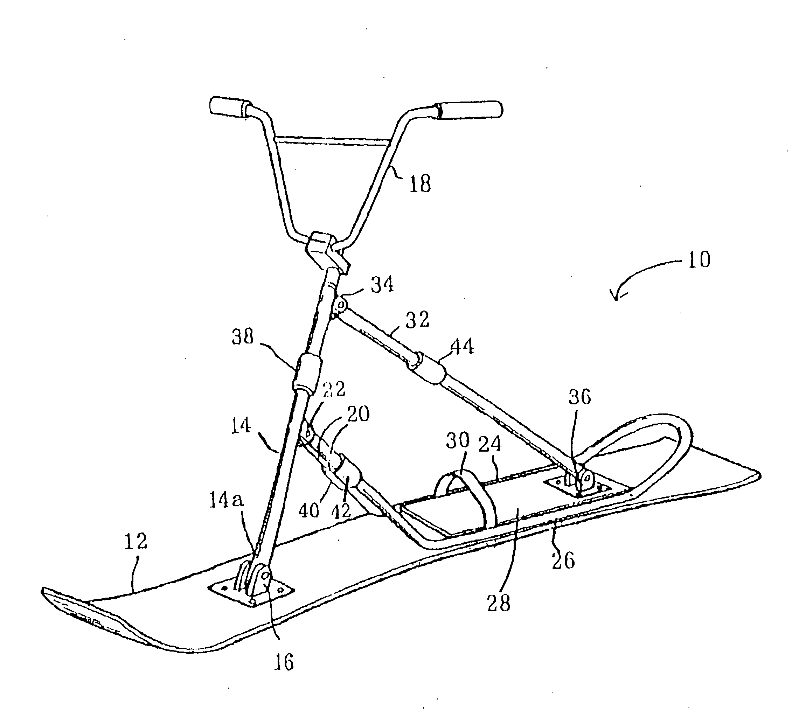

Nachfolgend wird die Struktur eines Schneegleiters gemäß einer Ausführungsform der Erfindung unter Bezugnahme auf die Zeichnung detailiiert beschrieben, die eine perspektivische Ansicht mit der Darstellung eines Schneegleiters gemäß einer Ausführungsform der Erfindung zeigt; dabei bezeichnen 10 einen Schneegleiter, 12 eine Gleitplatte, 14 eine vordere Strebe, 16 ein Scharnier, 18 einen Griff, 20 einen starren Rahmen, 22 ein Scharnier, 24 einen Rahmen-Verlängerungsbereich, 26 einen Rahmen-Verlängerungsbereich, 28 eine Fuß-Abstützplatte, 30 einen Fuß-Halteriemen, 32 eine hintere Strebe, 34 ein Scharnier, 36 ein Scharnier, 38 eine Federung, 40 eine Federung, 42 eine Federung und 44 Federung.

Ein Schneegleiter 10 gemäß Erfindung ist mit einer Gleitplatte 12 in der Gestalt eines Snowboards ausgestattet. Als Gleitplatte 12 kann ein existentes Snowboard verwendet werden, das mit Löchern zur Anbringung eines Rahmens und dergleichen ausgestattet ist, was unten noch beschrieben wird. Als Snowboards können irgendwelche Snowboards für den Abfahrtslauf, für den Alpinlauf und für Freestylelauf verwendet werden.

An dem unteren Ende 14a des vorderen Bereichs der Gleitplatte 12 ist eine vordere Strebe 14 mittels eines Scharniers 14 ausschließlich in Richtung bezogen auf die Gleitplatte 12 nach vom und nach hinten schwenkbar angebracht. Die vordere Strebe 14 erstreckt sich in einer schrägen bzw. geneigten Richtung nach oben und nach hinten um eine vorbestimmte Länge von dem unteren Ende 14a aus unter Berücksichtigung der körperlichen Größe des Fahrers. Der Winkel zwischen der oben beschriebenen vorderen Strebe 14 und der Gleitplatte 12 misst vorzugsweise 60 bis 80 Grad, insbesondere etwa 65 bis 75 Grad.

An dem oberen Ende der vorderen Strebe 14 ist ein Griff 18 in einer dargestellten Gestalt befestigt.

An dem mittleren Bereich der vorderen Strebe 14 ist ein starrer Rahmen 20 mittels eines Schamiers 22 in Richtung nach oben und nach unten schwenkbar angebracht. Der starre Rahmen 20 erstreckt sich in einer schrägen bzw. geneigten Richtung von einer zentralen Position aus in der Richtung von vom nach hinten über der Gleitplatte 12 zu der hinteren Seite hin, wobei er von dem vorderen Ende 20a zu der hinteren Seite hin zu einer gabelförmigen Gestalt aufgeteilt ist. Der starre Rahmen in der gabelförmigen Gestalt ist mit Rahmen-Verlängerungsbereichen 24 und 26 in seiner Fortsetzung integral ausgestattet. Die Rahmen-Verlängerungsbereiche 24 und 26 erstrecken sich zu der unteren Seite hin entlang der Seitenkanten der Gleitplatte 12 und sind an der Gleitplatte 12 mit Hilfe von Schrauben angebracht.

Eine Fuß-Abstützplatte 28, an der der Fahrer seine Füße anbringt, ist zwischen den Rahmen-Verlängerungsbereichen 24 und 26 vorgesehen. Es wird bevorzugt, dass der Hauptkörper der Fuß-Abstützplatte 28 durch eine starre, rechteckige Metallplatte gebildet und zur Befestigung an Seitenbereichen der Rahmen-Verlängerungsbereiche 24 und 26 im Wesentlichen entlang der gesamten Länge der beiden Seitenbereichen derselben angeschweißt ist. Weiter wird bevorzugt, dass die Fuß-Abstützplatte 28 mit der Gleitplatte 12 durch Befestigen an der Gleitplatte 12 mit Hilfe von Schrauben an mindestens vier Stellen an den beiden Seiten des vorderen Bereichs und des hinteren Bereichs zusammengefasst ist. Es wird bevorzugt, dass die Rahmen-Verlängerungsbereiche 24 und 26 und die Fuß-Abstützplatte 28 zunächst verschweißt sind und danach an der Gleitplatte 12 mit Hilfe von Schrauben befestigt sind. Es wird bevorzugt, dass die Fuß-Abstützplatte 28 an ihrer oberen Seite mit Gummi überzogen wird ist, das eine Fuß-Anbringungsfläche zur Verhinderung eines Rutschens bildet. Weiter ist an dem vorderen Bereich der Fuß-Abstützplatte 28 (oder der Rahmen-Verlängerungsbereiche 24, 26) ein Fuß-Halteriemen 30 in der Gestalt eines Sandalenriemens angebracht.

An dem vorderen Ende des oberen Bereichs der vorderen Strebe 14 ist eine hintere Strebe 32 mittels eines Scharniers 34 in der Richtung nach oben und nach unten schwenkbar angebracht. Die hintere Strebe 32 erstreckt sich in einer schrägen bzw. geneigten Richtung nach hinten und nach unten, und ihr unteres Ende ist an der Gleitplatte 12 oder an der Fuß-Abstützplatte 28 rückseitig des Fuß-Halteriemens 12 mittels eines Scharniers 36 in der Richtung nach oben und nach unten schwenkbar angebracht.

Die hintere Strebe 32 ist zwischen den beiden Beinen des Fahrers für das leichte Fahren eines Bogens angeordnet, indem es ermöglicht wird, das physikalische Gewicht an der Kante an der Innenseite des Bogens bei dem Fahren eines Bogens zur Einwirkung zu bringen. Um die aus dem physikalische Gewicht resultierende Kraft wirksam zu übertragen, wird es bevorzugt, dass die Gesamtheit der Fuß-Abstützplatte 28 an der Gleitplatte 12 so fest wie möglich befestigt ist.

An den mittleren Bereichen der vorderen Strebe 14, des starren Rahmens 20 und der hinteren Strebe 32 sind Federungen 38, 40, 42 und 44 vorgesehen. Die Aufgabe der Federungen 38, 40, 42 und 44 ist es, das Verbiegen zu absorbieren, wenn die Gleitplatte 12 in Zusammenarbeit mit den Schamieren 16, 22, 34 und 36 durchgebogen wird. Dadurch kann bei dem Schneegleiter beim Fahren von Bögen von den Kanten der Gleitplatte 12 wirksam vollständig Gebrauch gemacht werden, und sind das Fahren von Bögen und die Manövrierbarkeit erheblich verbessert. Im Gegensatz hierzu ist bei dem oben beschriebenen Skibob die Gleitplatte an der hinteren Seite im Wesentlichen ein starres Element durch das Anbringen des Rahmens oder der Fuß-Abstützplatte, und sind, wie oben angegeben, das Fahren von Bögen und die Manövrierbarkeit nicht so ausgezeichnet.

Die Gleitplatte 12 ist von einem herkömmlichen Snowboard gebildet, das aus einem mit Holz, Metall, Glasfaser oder Kohlefaser mittels eines Kunstharzes laminierten Material besteht. Es wird bevorzugt, dass die seitlichen Kantenbereiche der unteren Seite der Gleitplatte mit scharfen Metallschienen oder sogenanntem Kantenmaterial verstärkt sind, um einen Schutz gegen Reibung in Hinblick auf eine Gleitfläche, die aus Eis und Schnee besteht, obwohl ein Unterschied in einem gewissen Ausmaß besteht, und gegen statische Reibung insbesondere in dem Fall des Fahrens eines Bogens zu bilden.

Weiter wird bevorzugt, dass die vordere Strebe 14, der starre Rahmen 20 (einschließlich der Rahmen-Verlängerungsbereiche 24, 26) und die hintere Strebe 32 aus Metallrohren aus beispielsweise einer Aluminiumlegierung bestehen.

Zum Fahren auf Schnee mittels des oben erläuterten Schneegleiters bringt der Fahrer seine beiden Füße an der Fuß-Abstützplatte in einem Zustand ihrer Ausrichtung an, und setzt der sie in den Riemen ein, und fährt er, wobei er den Griff festhält. Auf diese Weise kann der Fahrer fahren, wobei er den Körper in der Fortbewegungsrichtung ausrichtet; weiter kann durch Halten des Griffs die Balance der oberen Körperhälfte leicht gehalten werden. Weiter kann zusätzlich zu der obigen Beschreibung durch wirksames Gebrauchmachen von der Durchbiegung der Gleitplatte, wie oben beschrieben, das Fahren von Bögen mit dem Snowboard beibehalten werden, während die Leichtigkeit des Gebrauchs der so genannten Skibobs beibehalten wird.

## Patentansprüche

1. Schneegleiter umfassend
eine Gleitplatte (12) in Gestalt eines Snowboards,
eine vordere Strebe (14), deren unteres Ende an dem vorderen Bereich der Gleitplatte (12) ausschließlich in Richtung nach vorne und nach hinten verschwenkbar angebracht ist und die sich schräg nach hinten und oben erstreckt,
eine Lenkstange (18) am oberen Ende der vorderen Strebe (14),
eine Rahmenstrebe(20), deren vorderes Ende im mittleren Bereich der vorderen Strebe (14) verschwenkbar angebracht ist und die sich nach unten und nach hinten in eine zentrale Position über der Gleitplatte (12) erstreckt,
eine Fuß-Abstützplatte (28)
eine Stützstrebe (32), deren vorderes Ende am oberen Bereich der vorderen Strebe (14) schwenkbar angebracht ist und die sich nach hinten und unten erstreckt,
**dadurch gekennzeichnet, dass**
die Rahmenstrebe(20) sich gabelförmig nach unten und nach hinten erstreckt, wobei sich an die beabstandeten Enden der gabelförmigen Rahmenstrebe (20) jeweils ein RahmenVerlängerungsteil (24, 26) anschließt, die sich längs der Ränder der Gleitplatte (12) erstrecken und an dieser befestigt sind,
die Fuß-Abstützplatte (28) zwischen den beiden Rahmen-Verlängerungsteilen (24, 26) angeordnet ist, wobei das hintere Ende der Stützstrebe (32) an der Fuß-Abstützplatte (28) schwenkbar angebracht ist,
ein Fuß-Halteriemen (30) an den Rahmen-Verlängerungsteilen (24, 26) oder an der Fuß-Abstützplatte (28) angebracht ist, und
Federungen (38, 40, 42, 44), die in der Achse der vorderen Strebe (14), der Rahmenstrebe (20) und der Stützstrebe (32) zur Absorption der Kräfte vorgesehen sind, die in Achsrichtung auf die Streben beim Durchbiegen der Gleitplatte auftreten.

2. Schneegleiter nach Anspruch 1, wobei die vordere Strebe (14) einen Winkel von 60 bis 80° mit der Gleitplatte (12) bildet.

3. Schneegleiter nach den Ansprüchen 1 und 2, wobei die hinteren Enden der Rahmen-Verlängerungsteile (24, 26) bogenförmig miteinander verbunden sind, und der Verbindungsbereich schräg nach oben von der Gleitplatte (12) absteht.

## Claims

1. Snow glider, comprising
a sliding plate (12) in the shape of a snowboard,
a front stay (14), whose lower end is attached, pivotably and exclusively in a direction forwards and rearwards, to the front portion of the sliding plate (12), wherein the front stay (14) extends diagonally rearwards and upwards,
a handlebar (18) at the upper end of the front stay (14),
a frame stay (20) whose front end is pivotably attached in the middle portion of the front stay (14) and which extends downwards and rearwards in a central position over the sliding plate (12),
a feet supporting plate (28), and
a supporting stay (32) whose front end is pivotably attached at the upper portion of the front stay (14) and which extends rearwards and downwards,
**characterized in that**
the frame stay (20) extends downwards and rearwards in a bifurcated shape, wherein frame extension portions (24, 26) are connected to each of the spaced ends of the bifurcated frame stay (20) and extend along the edges of the sliding plate (12), to which they are fixed,
the feet supporting plate (28) is arranged between the two frame extension portions (24, 26), wherein the rear end of the supporting stay (32) is pivotably attached to the feet supporting plate (28),
a foot holding belt (30) is fixed to the frame extension portions (24, 26) or to the feet supporting plate (28), and
suspensions (38, 40, 42, 44) are provided in the axis of the front stay (14), the frame stay (20), and the supporting stay (32) for absorbing the forces on the stays which occur in the axial direction during bending of the sliding plate.

2. Slow glider according to claim 1, wherein the front stay (14) forms an angle of 60° to 80° with the sliding plate (12).

3. Slow glider according to claims 1 and 2, wherein the rear ends of the frame extension portions (24, 26) are joined to one another in an arcuate shape, and the connection portion projects from the sliding plate (12) in a diagonally upwards direction.

## Revendications

1. Engin de glisse sur neige, comprenant
une planche de glisse (12) ayant la forme d'une planche de surf des neiges,
un montant avant (14) dont l'extrémité inférieure sur la région avant de la planche de glisse (12) est disposée de façon basculante exclusivement vers l'avant et vers l'arrière et qui s'étend de manière oblique vers l'arrière et vers l'avant,
un guidon (18) sur l'extrémité supérieure du montant avant (14),
un montant de cadre (20), dont l'extrémité avant dans la région médiane du montant avant (14) est disposée de façon basculante et qui s'étend vers le bas et vers l'arrière dans une position centrale sur la planche de glisse (12),
une plaque repose- pieds (28), un montant d'appui (32) dont l'extrémité avant sur la région supérieure du montant avant (14) est disposée façon basculante et qui s'étend vers l'arrière et vers le bas,
**caractérisé en ce que**,
le montant de cadre (20) s'étend en forme de fourche vers le bas et vers l'arrière de sorte que sur les extrémités espacées du montant de cadre (20) en forme de fourche se raccordent respectivement une partie de prolongement de cadre (24,26) qui s'étendent le
long des bords de la planche de glisse (12) et sont fixées sur celle-ci,
la plaque repose - pieds (28) est disposée entre les deux parties de prolongement de cadre (24,26), de sorte que la partie arrière du montant d'appui (32) est disposée de façon basculante sur la plaque repose - pieds (28),
une courroie ou sangle de maintien de pieds (30) est disposée sur les parties de prolongement de cadre (24,26) ou sur la plaque de repose - pieds (28), et
des suspensions à ressorts (38,40,42,44) qui sont prévues dans l'axe du montant avant (14), du montant de cadre (20) et du montant d'appui (32) pour l'absorption des forces
qui se produisent dans la direction axiale sur les montants lors du fléchissement de la planche de glisse.

2. Engin de glisse sur neige selon la revendication 1, dans lequel le montant avant (14) forme un angle de 60 à 80° par rapport à la planche de glisse (12).

3. Engin de glisse selon les revendications 1 et 2, dans lequel les extrémités arrière des parties de prolongement de cadre (24,26) sont raccordées entre elles en forme d'arc, et la région de liaison fait saillie obliquement vers le haut de la planche de glisse (12).
